# EUROPÄISCHE PATENTSCHRIFT

(11) **EP 2 154 474 B1**
(45) Veröffentlichungstag und Bekanntmachung des Hinweises auf die Patenterteilung: **30.05.2018**
(21) Anmeldenummer: 09164736.2
(22) Anmeldetag: 07.07.2009
(51) Int. Cl.: G01C 15/00, F16M 11/16

(54) **Lasergerät**
Laser device
Appareil laser

(30) Priorität: 06.08.2008 DE 102008041029
(43) Veröffentlichungstag der Anmeldung: 17.02.2010
(73) Patentinhaber: HILTI Aktiengesellschaft, 9494 Schaan (LI)
(72) Erfinder: Barth, Stefan, 6800, Feldkirch (AT); Ammann, Manfred, 6923, Lauterach (AT)
(74) Vertreter: Hilti Aktiengesellschaft Corporate Intellectual Property

(56) Entgegenhaltungen:
- DE-U1-202006 004 049
- US-A1- 2005 155 238
- US-B1- 6 763 596

## Beschreibung

Die Erfindung betrifft ein Lasergerät mit einer Lasereinheit und einer Gleitlagereinrichtung.

Dabei ist unter Lasergerät ein Baulaser zu verstehen, wie er im Baugewerbe zu Zwecken der Definition, Übertragung bzw. Nivellierung von Ebenen, Linien oder Punkten eingesetzt wird. Somit lassen sich statische Baulaser wie Punkt- oder Linienlaser ebenso unter dem Begriff Lasergerät subsumieren wie Rotationsbaulaser, bei dem die Lasereinheit einen zumindest teilweise rotierenden Laserstrahl aussendet. Insbesondere kommt die Erfindung bei Rotationsbaulasern mit einer als Rotationseinheit ausgebildeten Lasereinheit zum Einsatz, weswegen sich die nachfolgende Beschreibung zur Vereinfachung auch auf diese Art von Baulaser bezieht. Es sei allerdings darauf hingewiesen, dass dies keine Einschränkung des Schutzumfanges bewirkt und die Erfindung sich ebenso auf alle anderen Arten von Baulasern mit einer verstellbaren Lasereinheit bezieht.

Rotationsbaulaser mit einer als Rotationseinheit ausgebildeten Lasereinheit, die einen zumindest teilweise rotierenden Laserstrahl aussendet, werden vor allem im Baugewerbe eingesetzt, um auf Wänden, Decken und Böden, horizontale, vertikale oder definiert geneigte Ebenen zu erzeugen und festzulegen. Rotationsbaulaser werden auch, beispielsweise im Scanbetrieb, dazu verwendet, vordefinierte Abschnitte von Ebenen oder Markierungen (Punkte, Striche, etc.) festzulegen bzw. als Bezug zu erzeugen.

Bei Rotationsbaulasern ist eine robuste Konstruktion von großer Bedeutung, da die Geräte im Baugewerbe außerordentlichen Belastungen ausgesetzt sind. Gleichzeitig müssen die Geräte eine hohe Präzision aufweisen. Die Festlegung von Ebenen oder Markierungen oder dergleichen muss mit einer hohen Präzision erfolgen.

Es ist also wichtig, eine robuste Konstruktion des Rotationsbaulasers zu realisieren, wobei eine Einstellung eines vorgegebenen Neigungswinkels der Rotationseinheit bezüglich des Gehäuses des Rotationsbaulasers präzise und einfach ist.

Eine Lagereinrichtung zum Neigen bzw. Justieren der Rotationseinheit des Rotationsbaulasers muss daher robust sein und leicht einstellbar. Dabei wird die Rotationseinheit mittels der Lagereinrichtung im Wesentlichen justiert. D.h., in der Regel erfolgt vor der Justage eine Grobeinstellung, beispielsweise von einer Bedienperson. Dies kann beispielsweise von Hand unter Zuhilfenahme von von außen sichtbaren am Rotationsbaulaser angebrachten Libellen erfolgen. Anschließend kann die Bedienperson eine automatische Justage einleiten, bei der die Rotationseinheit beispielsweise mittels Servomotoren und der Lagereinrichtung fein eingestellt (justiert) wird.

DE 20 2006 004 049 U1 offenbart ein Lasergerät mit einer Lasereinheit und einer Gleitlagereinrichtung, die eine Gelenkpfanne und eine Gleiteinheit unfasst. Die Gleiteinheit weist eine Konvexfläche und die Gelenkpfanne eine Konkavfläche auf; die Konvexfläche liegt gleitend an der Konkavfläche an.

US 6,763,596 B1 offenbart ein Lasergerät mit einer Lasereinheit und einer Gleitlagereinrichtung, mit der die Lasereinheit um eine erste Schwenkachse und eine zweite Schwenkachse verstellbar ist. Die Gleitlagereinrichtung ist als zweiachsiges Kardangelenk ausgebildet und umfasst einen inneren Tragrahmen und einen äußeren Tragrahmen. Um die Neigung der Lasereinheit in einer Vorzugsrichtung sicher zu stellen, sind zusätzliche Führungsmittel erforderlich.

Der Erfindung liegt die Aufgabe zugrunde, einen Rotationsbaulaser bereitzustellen, der oben genannten Anforderungen gerecht wird. Weitere Vorteile des Rotationsbaulasers ergeben sich aus der folgenden Beschreibung.

Die Aufgabe wird durch die Merkmale des Anspruchs 1 gelöst. Vorteilhafte Weiterbildungen ergeben sich aus den abhängigen Ansprüchen.

Der hier beschriebene Rotationsbaulaser weist eine Rotationseinheit auf. Die Rotationseinheit kann beispielsweise mit Kugellagern drehbar um eine Drehachse gelagert sein und eine Umlenkeinrichtung aufweisen. Die Umlenkeinrichtung kann dabei dazu dienen, den Laserstrahl umzulenken.

Der Rotationsbaulaser umfasst ferner eine Gleitlagereinrichtung mit einer ersten Gelenkpfanne und einer ersten Gleiteinheit bzw. einem ersten Gleitteil. Die erste Gleiteinheit weist eine erste Gleitkufe mit einer ersten Konvexfläche in Form eines ersten Zylinderabschnitts und die erste Gelenkpfanne eine erste Konkavfläche in Form eines ersten Hohlzylinderabschnitts auf, so dass die erste Konvexfläche in die erste Konkavfläche eingreifen kann. Die Rotationseinheit ist mit der ersten Gleiteinheit verbunden, so dass sich die Rotationseinheit bei einer Relativbewegung zwischen der ersten Konvexfläche und der ersten Konkavfläche in einer Schwenkebene neigt.

Die aufeinander gleitenden Konkav- und Konvexflächen werden in Form von ein oder mehreren Gleitkufen gebildet. Eine Neigung der Rotationseinheit wird somit durch ein Gleiten der Konvexfläche auf der Konkavfläche bewirkt. Aufgrund der Ausbildung der Gleitlagereinrichtung mittels der beschriebenen Konvex- bzw. Konkavflächen ergibt sich eine sehr gute Verdrehsicherung. Die Gleiteigenschaften sind genau definierbar und ein Verdrehen gegenüber der Achse des dem Zylinderabschnitt zugrunde liegenden Zylinders und der Achse des dem Hohlzylinderabschnitt zugrunde liegenden Hohlzylinders ist nicht möglich.
Weiterhin ist durch die Ausbildung von relativ großen Gleitflächen eine große mechanische Robustheit gewährleistet. Es findet insbesondere keine Punktlagerung statt. Die Gleitflächen können dabei auch unterbrochen sein oder unterschiedlich breit sein. Sie können beispielsweise auch Aussparungen aufweisen, um so den Reibwiderstand zu verringern. Durch die konkrete Ausgestaltung der Gleitflächen können somit unterschiedlichste Anforderungen erfüllt werden.
Die Gleitlagerung ergibt also die bereits erwähnte sehr gute Verdrehsicherung. Die guten Gleiteigenschaften werden durch die vordefinierten Gleitflächen realisiert.

Weiterhin wird durch die Ausbildung der Gleitlagereinrichtung mittels der definierten Konkav- bzw. Konvexflächen eine Schwenkebene fest vorgegeben, in der sich die Rotationseinheit neigt. Die Schwenkebene ist dabei im Wesentlichen senkrecht zu der Achse des dem Zylinderabschnitt zugrunde liegenden Zylinders. Es gibt somit eine Vorzugsrichtung (Schwenkebene) in welche die Rotationseinheit neigbar ist. Dies ist ein Vorteil gegenüber anderen Lagerungen, z.B. einer Lagerung mittels Kugel, Kugelkalotte oder Kardangelenk. Bei solchen Lagerungen müssen andere Führungsmittel vorgesehen werden, um eine Neigung in einer Vorzugsrichtung sicher zu stellen. Auf solche Führungsmittel kann also durch die Erfindung verzichtet werden.
In einer bevorzugten Ausführungsform kann die Gleiteinheit eine weitere Gleitlagereinrichtung mit einer weiteren Gelenkpfanne und einer weiteren Gleiteinheit (zweites Gleitteil) enthalten. Dabei weist die zweite Gleiteinheit eine zweite Konvexfläche in Form eines zweiten Zylinderabschnitts auf und die zweite Gelenkpfanne eine zweite Konkavfläche in Form eines zweiten Hohlzylinderabschnitts. Dabei kann die zweite Konvexfläche in die zweite Konkavfläche eingreifen, so dass sich die Rotationseinheit bei einer Relativbewegung zwischen der zweiten Konvexfläche und der zweiten Konkavfläche in einer zweiten Schwenkebene neigt. Die zweite Schwenkebene kann dabei unabhängig bzw. unterschiedlich von der ersten Schwenkebene sein.

In einer bevorzugten Ausführungsform stehen die erste Schwenkebene und die zweite Schwenkebene in einem vorbestimmten Winkel zueinander. Der Winkel kann dabei unveränderlich sein, so dass der Winkel zwischen den Schwenkebenen durch den vorbestimmten Winkel zwischen den Achsen des Zylinders und Hohlzylinders festgelegt ist. Die erste Schwenkebene und die zweite Schwenkebene können in einer bevorzugten Ausführungsform auch rechtwinklig zueinander stehen.

Weiterhin bevorzugt sind die Radien des ersten Zylinderabschnitts und des ersten Hohlzylinderabschnitts im Wesentlichen gleich. Damit haben die ersten Konkav- und Konvexflächen eine größtmögliche Kontaktfläche und somit eine gute Führung und gute Gleiteigenschaften. Auch die Radien des zweiten Zylinderabschnitts und des zweiten Hohlzylinderabschnitts können in einer weiteren Ausführungsform im Wesentlichen gleich sein. Somit gilt auch hier, dass die zweiten Konkav- bzw. Konvexflächen eine ausreichende Kontaktfläche und somit eine gute Führung bzw. gute Gleiteigenschaften haben. Die Radien des ersten Zylinderabschnitts, des zweiten Zylinderabschnitts, des ersten Hohlzylinderabschnitts und des zweiten Hohlzylinderabschnitts können auch alle im Wesentlichen gleich sein.

In einer weiteren Ausführungsform ist die Umlenkeinrichtung so ausgebildet, dass sie den Laserstrahl an einem dem Austrittspunkt des Laserstrahls entsprechenden Umlenkpunkt umlenkt. Bevorzugt kann der Mittelpunkt bzw. die Achse des dem ersten Zylinderabschnitt zugrunde liegenden Zylinders, der Mittelpunkt bzw. die Achse des dem zweiten Zylinderabschnitts zugrunde liegenden Zylinders, der Mittelpunkt bzw. die Achse des dem ersten Hohlzylinderabschnitt zugrunde liegenden Hohlzylinders und/oder der Mittelpunkt bzw. die Achse des dem zweiten Hohlzylinderabschnitt zugrunde liegenden Hohlzylinders mit dem Umlenkpunkt zusammenfallen.

Wenn der Mittelpunkt bzw. die Achse des dem ersten Zylinderabschnitt zugrunde liegenden Zylinders, der Mittelpunkt bzw. die Achse des dem zweiten Zylinderabschnitt zugrunde liegenden Zylinders, der Mittelpunkt bzw. die Achse des dem ersten Hohlzylinderabschnitt zugrunde liegenden Hohlzylinders und/oder der Mittelpunkt bzw. die Achse des dem zweiten Hohlzylinderabschnitt zugrunde liegenden Hohlzylinders mit dem Umlenkpunkt zusammenfallen, so verändert sich die Höhe des Umlenkpunkts bei einer Neigung der Rotationseinheit nicht. Damit ist eine einfache Einstellung vordefinierter Winkel ohne komplizierte Berechnungen möglich. Weiterhin kann die Umlenkeinrichtung kompakt in dem Gehäuse des Rotationsbaulasers verbaut werden. Das Gehäuse kann insbesondere einen geringen Abstand zu der Umlenkeinrichtung haben. Dies wäre bei einer Höhenverstellung bzw. einer Änderung des Abstands zwischen Umlenkeinrichtung und innerer Gehäusewand wie sie bei anderen bekannten Lagerungen auftritt nicht möglich. Die hier beschriebene Gleitlagerung ermöglicht also einen kompakten und Platz sparenden Aufbau des Rotationsbaulasers.

Bevorzugt können erste Spannfedern vorgesehen werden, mittels welcher die erste Konkavfläche und die erste Konvexfläche aneinander pressbar sind bzw. zueinander angezogen werden. Es kann somit erreicht werden, dass die erste Konkavfläche und erste Konvexfläche in allen Lagen in Kontakt bleiben. Ebenso können zweite Spannfedern vorgesehen sein, mittels welcher die zweite Konkavfläche und die zweite Konvexfläche aneinander pressbar sind bzw. zueinander angezogen werden. Der Effekt der zweiten Spannfedern ist auch hier, dass eine vordefinierte Kraft auf die Gleitflächen wirkt und somit eine im Wesentlichen konstante oder einstellbare Gleiteigenschaft erreicht wird, im Wesentlichen unabhängig von der Lage des Gehäuses des Rotationsbaulasers.

In einer bevorzugten Ausführungsform kann auch eine mit der ersten Gelenkpfanne fest verbundene erste Sicherungseinrichtung vorgesehen sein, mittels welcher ein Herausfallen der ersten Gleiteinheit aus der ersten Gelenkpfanne verhinderbar ist. Ähnlich kann auch die zweite Gelenkpfanne eine zweite Sicherungseinrichtung aufweisen, mittels welcher ein Herausfallen der zweiten Gleiteinheit aus der zweiten Gelenkpfanne verhinderbar ist.

In einer weiteren bevorzugten Ausführungsform kann die Konvexfläche aus gleitmodifiziertem Material hergestellt sein. Die Konkavfläche kann dabei aus nicht-gleitmodifiziertem Material hergestellt sein, so dass eine gute Gleiteigenschaft erreicht wird. Ebenso kann die weitere Konkavfläche aus gleitmodifiziertem Material hergestellt sein und die Konkavfläche und die weitere Konvexfläche aus nicht-gleitmodifiziertem Material. Beispielsweise kann die erste Konkavfläche und die zweite Konvexfläche aus normalem Kunststoff hergestellt sein und die erste Konvexfläche und die zweite Konkavfläche aus gleitmodifiziertem Kunststoff. Somit ergeben sich zwischen der ersten Konkav- und ersten Konvexfläche sowie zwischen der zweiten Konkav- und zweiten Konvexfläche gute Gleiteigenschaften.

Die Erfindung wird im Folgenden anhand der beigefügten Figuren erläutert. In den Figuren zeigen:
- Fig. 1: eine perspektivische Ansicht der Bauteile der Gleitlagereinrichtung;
- Fig. 2: eine perspektivische Ansicht des ersten Gleitteils der Gleitlagereinrichtung;
- Fig.3: eine perspektivische Ansicht des zweiten Gleitteils der Gleitlagereinrichtung;
- Fig. 4: eine perspektivische Ansicht der zusammengebauten Gleitlagereinrichtung;
- Fig. 5: eine schematische Ansicht zur Verdeutlichung der Wirkung der Gleitlagereinrichtung;
- Fig. 6: eine Schnittansicht des Rotationsbaulasers mit Rotationseinheit und Gleitlagereinrichtung;
- Fig. 7: zeigt eine weitere Ausführungsform einer Gleitlagereinrichtung, wobei die Gelenkpfanne Gleitbereiche bzw. Kontaktbereiche aufweist; und
- Fig. 8: zeigt noch eine weitere Ausführungsform einer Gleitlagereinrichtung, wobei das Gleitteil Kontaktbereiche aufweist.

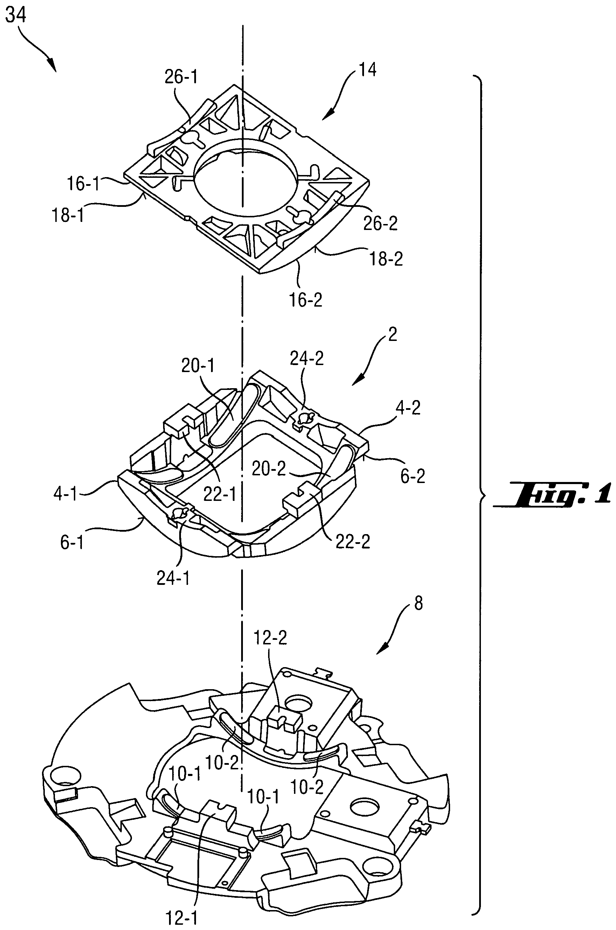

Fig. 1 zeigt ein erstes Gleitteil 2 (Gleiteinheit) mit ersten Gleitkufen 4-1 und 4-2 und ersten Konvexflächen 6-1, 6-2. Die ersten Konvexflächen 6-1, 6-2 weisen dabei die Form eines Zylinderabschnitts auf. Fig. 1 zeigt ferner eine Aufbauplatte 8 mit ersten Konkavflächen 10-1, 10-2 und ersten Sicherungseinrichtungen bzw. Vorsprüngen 12-1, 12-2. Die Konkavflächen 10-1, 10-2 haben die Form eines Hohlzylinderabschnitts und bilden die Gelenkpfanne des Gleitlagers. Da nur eine Neigung in einer vorbestimmten Schwenkebene möglich ist, kann das Lager auch als Scharnier bezeichnet werden. Die Schwenkebene ist dabei im Wesentlichen senkrecht zu der Achse des dem Zylinderabschnitt zugrunde liegenden Zylinders bzw. zu der Achse des dem Hohlzylinderabschnitt zugrunde liegenden Hohlzylinders.
Beim Zusammenbau der Gleitlagereinrichtung wird das erste Gleitteil 2 in die Aufbauplatte 8 eingesetzt, so dass die ersten Konvexflächen 6-1, 6-2 auf den ersten Konkavflächen 10-1, 10-2 zu liegen kommen. Um einen guten Kontakt und somit gute Gleiteigenschaften zu erreichen, haben die ersten Konkavflächen 10-1, 10-2 die Form eines Hohlzylinderabschnitts, wobei der Radius des dem Hohlzylinderabschnitt zugrunde liegenden Hohlzylinders gleich dem Radius des dem Zylinderabschnitt der Konvexfläche zugrunde liegenden Zylinders ist.

Beim Zusammenbau der Gleitlagereinrichtung gleitet also die erste Gleitkufe 4-1 mit der ersten Konvexfläche 6-1 auf der ersten Konkavfläche 10-1. Ferner gleitet die erste Gleitkufe 4-2 mit der ersten Konvexfläche 6-2 auf der ersten Konkavfläche 10-2.

Um ein Herausfallen des ersten Gleitteils 2 aus der Aufbauplatte 8 zu verhindern, weist die Aufbauplatte 8 die erste Sicherungseinrichtung 12-1, 12-2 auf. Wie Fig. 1 zu erkennen gibt, ist die erste Sicherungseinrichtung in Form von Vorsprüngen ausgebildet, die sich bei einer Relativbewegung des ersten Gleitteils 2 zu der Aufbauplatte 8 entlang eines kreisförmigen Ausschnitts 24 im ersten Gleitteil 2 bewegen. Somit bleibt die Gleitlagereinrichtung auch dann voll funktionsfähig, wenn der Rotationsbaulaser beispielsweise herunterfällt oder auf den Kopf gestellt wird.

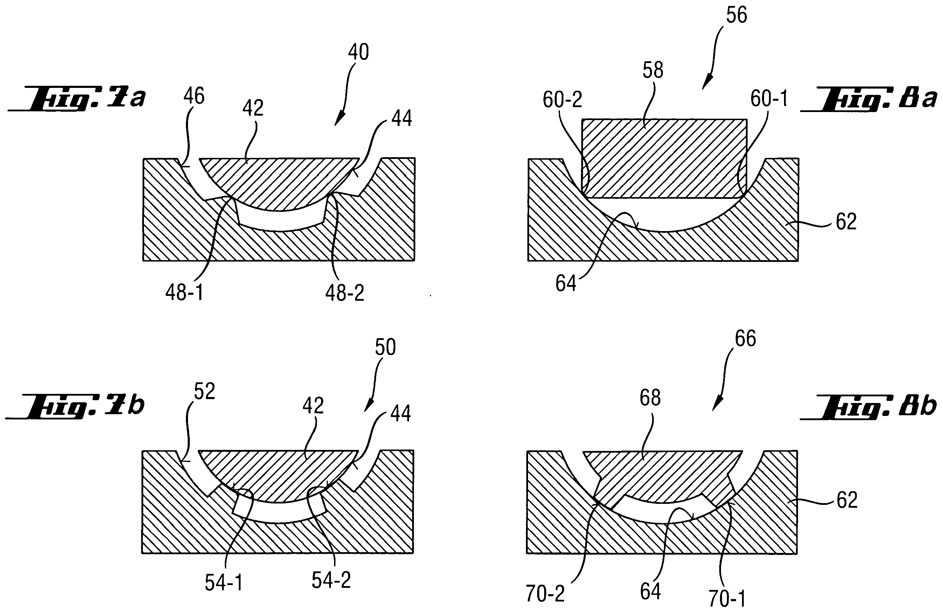

Bei einem Gleiten der ersten Konvexflächen 6-1, 6-2 auf den ersten Konkavflächen 10-1, 10-2 kann eine mit dem ersten Gleitteil 2 verbundene Rotationseinheit (in Fig. 1 nicht dargestellt, siehe Fig. 7) in einer ersten Schwenkebene, die parallel zu den Gleitkufen 4-1, 4-2 verläuft, geneigt werden.

Erfindungsgemäß kann also eine Neigung der Rotationseinheit allein durch Bereitstellen des ersten Gleitteils 2 und der Aufbauplatte 8 erreicht werden. Damit ist eine Neigung in einer ersten Schwenkebene möglich. Neigungen in anderen Schwenkebenen oder freie andere Neigungen können durch ein zweites Gleitteil 14 (weitere Gleiteinheit) ermöglicht werden. In einer (nicht dargestellten) Ausführungsform kann eine Neigung in einer zweiten Schwenkebene jedoch auch durch andere bekannte Mittel möglich sein.

Das zweite (weitere) Gleitteil 14 weist zweite Gleitkufen 16-1, 16-2 und zweite (weitere) Konvexflächen 18-1, 18-2 auf. Die zweiten Konvexflächen 18-1, 18-2 haben die Form eines zweiten (weiteren) Zylinderabschnitts.

Um die Neigung in der zweiten Schwenkebene zu realisieren, wird das zweite Gleitteil 14 in das erste Gleitteil 2 eingesetzt. Hierzu weist das erste Gleitteil 2 zweite Konkavflächen 20-1, 20-2 auf, die bei der zusammengebauten Gleitlagereinrichtung die zweiten Konvexflächen 18-1, 18-2 berühren. Die zweite Konvexfläche 18-1 berührt dabei die zweite Konkavfläche 20-1 und die zweite Konvexfläche 18-2 berührt die zweite Konkavfläche 20-2. Das erste Gleitteil bildet mit den zweiten Konkavflächen 20-1, 20-2 eine zweite (weitere) Gelenkpfanne.

Um ein Herausfallen des zweiten Gleitteils 14 aus dem ersten Gleitteil 2 zu verhindern, weist das erste Gleitteil 2 eine zweite Sicherungseinrichtung 22 auf. Die Sicherungseinrichtung ist aus zwei Vorsprüngen 22-1, 22-2 gebildet, die sich bei einer Relativbewegung zwischen dem ersten Gleitteil 2 und dem zweiten Gleitteil 14 entlang konkavförmiger Vorsprünge 26-1, 26-2 bewegen.

Die ersten Konkavflächen 10-1, 10-2 bilden somit eine erste "Gelenkpfanne". Ferner bilden die zweiten Konkavflächen 20-1, 20-2 eine zweite (weitere) Gelenkpfanne.

Wie bereits oben angedeutet, kann mit der Erfindung auch nur eine Neigung in einer Schwenkebene erreicht werden. Es ist daher für die Erfindung ausreichend, die Gleitlagereinrichtung durch Einsetzen des ersten Gleitteils 2 in die Aufbauplatte 8 zu realisieren. Für eine Realisierung von Neigungen, die von der ersten Schwenkebene bzw. Neigungsebene abweichen, können beliebige Mittel vorgesehen sein. Das Vorsehen eines zweiten Gleitteils 14 wie in Fig. 1 gezeigt, ist lediglich eine Möglichkeit. Das zweite Gleitteil 14 ist also als optional anzusehen.

Das erste Gleitteil 2 kann auch als "Kreuzgleiter" bezeichnet werden, da es gleichsam das Mittelstück der Gleitlagereinrichtung bildet und mittels der ersten Gleitkufen 4-1, 4-2 und den zweiten Konkavflächen 20-1, 20-2 eine Neigung der Rotationseinheit in zwei zueinander senkrecht stehenden Schwenkebenen ermöglicht.

An dieser Stelle sei angemerkt, dass es keinesfalls zwingend ist, dass die beiden Schwenkebenen senkrecht zueinander stehen. Alle in der Beschreibung genannten Vorteile können auch erreicht werden, wenn dies nicht der Fall ist und die Schwenkebenen in einem vorbestimmten anderen Winkel zueinander stehen.

Das erste Gleitteil 2 kann vorteilhafterweise aus gleitmodifiziertem Material, z.B. Kunststoff, hergestellt sein. Weiter können die Aufbauplatte 8 und das zweite Gleitteil 14 aus nicht gleitmodifiziertem Material, z.B. nicht gleitmodifiziertem Kunststoff, hergestellt sein. Somit ergeben sich entlang aller Gleitflächen 10-1, 10-2, 6-1, 6-2, 20-1, 20-2, 18-1, 18-2 gute Gleiteigenschaften, da jeweils nicht gleitmodifiziertes Material auf gleitmodifiziertem Material gleitet.

Bezüglich der Konkav- bzw. Konvexflächen in Fig. 1 ist weiter anzumerken, dass die Radien der den Konvex-/Konkavflächen zugrunde liegenden Zylinder/Hohlzylinder im Wesentlichen gleich sind und der Mittelpunkt bzw. die Achse der Zylinder bzw. Hohlzylinder mit einem Umlenkpunkt bzw. Austrittspunkt des Lasers (in Fig. 1 nicht dargestellt, siehe Fig. 7) zusammenfällt. Hierzu muss die Höhe der Rotationseinheit, die beispielsweise in dem zweiten Gleitteil 14 drehbar gelagert ist, entsprechend eingestellt bzw. justiert werden (siehe Fig. 7).

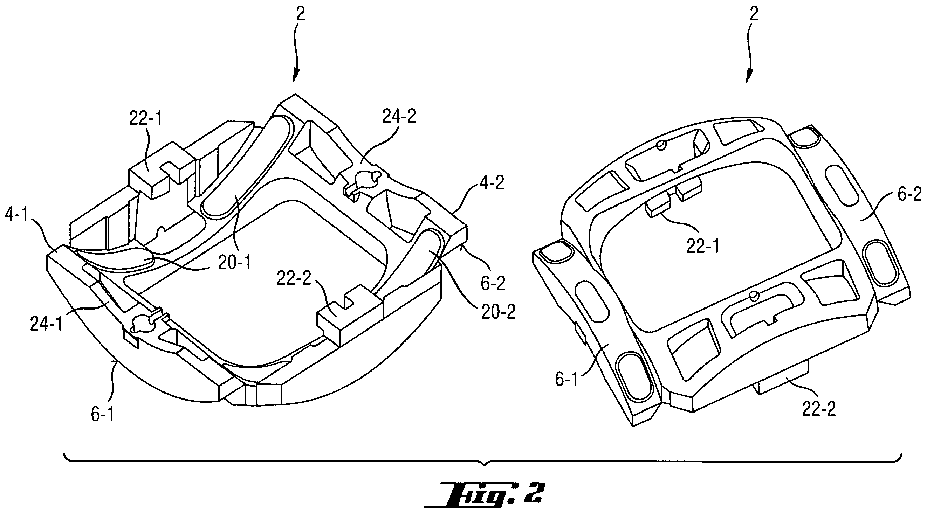

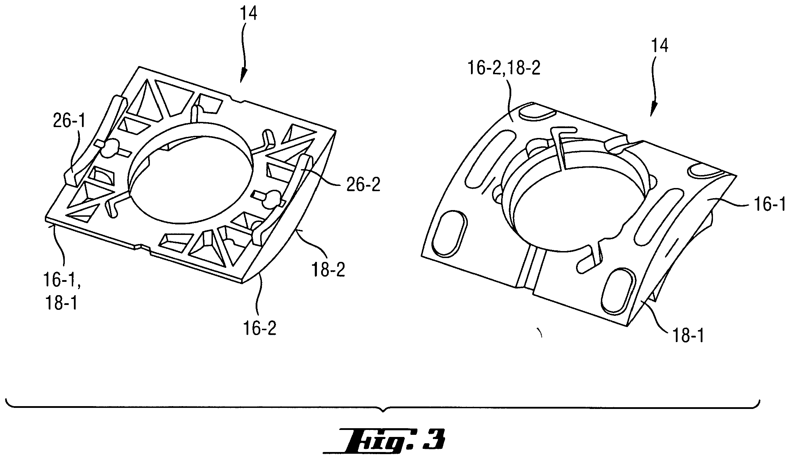

Fig. 2 zeigt eine perspektivische Ansicht von oben und unten des ersten Gleitteils 2 (Kreuzgleiter). Ferner zeigt Fig. 3 eine perspektivische Ansicht von oben und unten des zweiten Gleitteils 14.

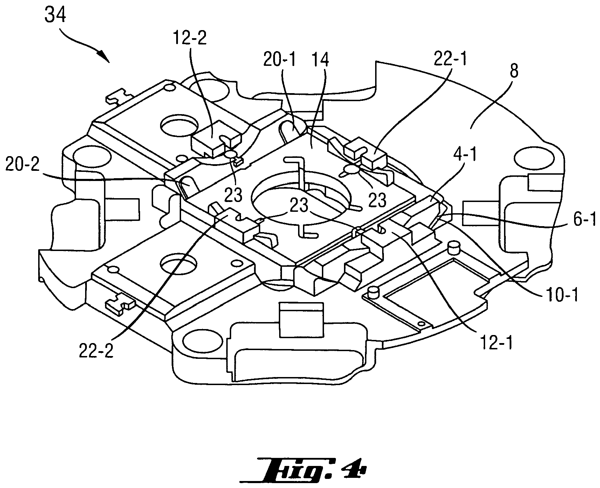

Fig. 4 zeigt die Aufbauplatte 8 mit darin eingesetztem ersten Gleitteil 2. Im ersten Gleitteil 2 ist das zweite Gleitteil 14 eingesetzt. Fig. 4 zeigt auch Spannfedern 23, die in entsprechende Aussparungen eingesetzt sind. Mittels der Spannfedern sind die Konkavfläche und die Konvexfläche aneinander anpressbar bzw. die die weitere Konkavfläche und die weitere Konvexfläche sind aneinander anpressbar. Es kann somit erreicht werden, dass die Konkavfläche und Konvexfläche in allen Lagen in Kontakt bleiben bzw. dass eine vordefinierte Kraft auf die Gleitflächen wirkt und somit eine im Wesentlichen konstante oder einstellbare Gleiteigenschaft erreicht wird, im Wesentlichen unabhängig von der Lage des Gehäuses des Rotationsbaulasers.

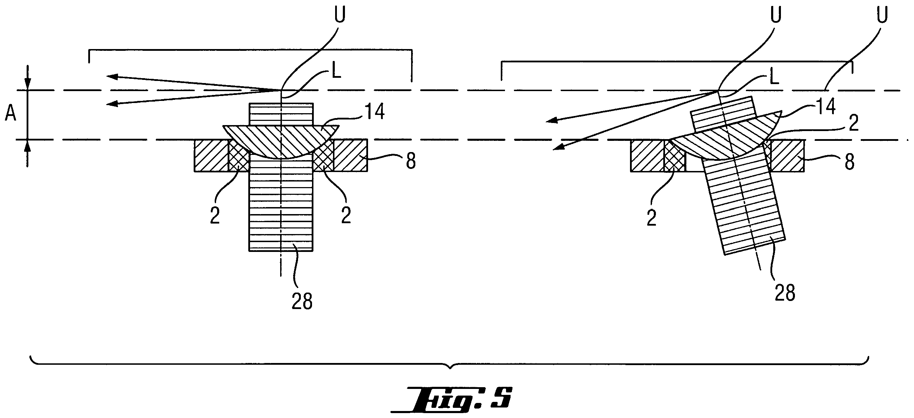

Fig. 5 zeigt eine schematische Ansicht des Rotationsbaulasers mit in der Gleitlagereinrichtung gelagerter Lasereinheit 28. Die Lasereinheit 28 erzeugt einen Laserstrahl L, der in einem Umlenkpunkt U mittels einer (nicht dargestellten) Umlenkeinrichtung umgelenkt wird. Aufgrund der Lage des Umlenkpunkts U bzw. Austrittspunkts des Lasers im Mittelpunkt bzw. der Achse der Zylinder bzw. Hohlzylinder, die den jeweiligen Konkav- bzw. Konvexflächen zugrunde liegen, verändert der Umlenkpunkt U seine Lage bei einer Neigung der Lasereinheit 28 nicht. Insbesondere verändert der Umlenkpunkt U nicht seine Höhe A gegenüber der Aufbauplatte 8.

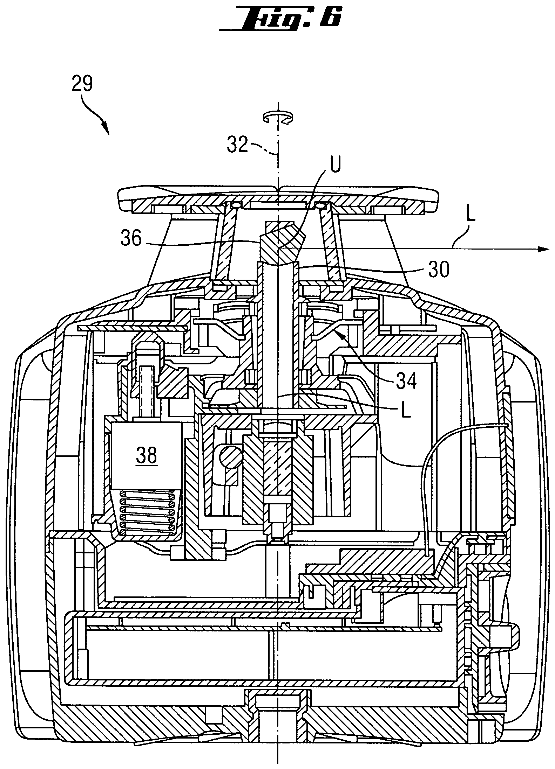

Fig. 6 zeigt eine Schnittansicht eines Rotationsbaulasers 29 mit Rotationseinheit 30 und Gleitlagereinrichtung 34, in der eine Lasereinheit gelagert ist. Die Rotationseinheit 30 ist um eine Rotationsdrehachse 32 drehbar gelagert.

Der Rotationsbaulaser 29 weist ferner eine Umlenkeinrichtung 36 auf, mittels der ein in der Lasereinheit erzeugter Laserstrahl L umgelenkt werden kann. Der Umlenkpunkt U bzw. Austrittspunkt des Lasers liegt dabei in den Mittelpunkten bzw. Achsen der den Konkav- bzw. Konvexflächen zugrunde liegenden Zylindern bzw. Hohlzylindern.

Der Rotationsbaulaser 29 weist ferner wenigstens einen Antrieb 38 auf, mittels welchem die Lasereinheit und somit die Rotationseinheit 30 in vorgebbare Winkel neigbar ist.

Fig. 7a zeigt eine weitere Ausführungsform einer Gleitlagereinrichtung 40. Die Gleitlagereinrichtung 40 umfasst ein Gleitteil 42 mit einer Konvexfläche 44 in Form eines Zylinderabschnitts und eine Gelenkpfanne 46.

Die Gelenkpfanne 46 weist zwei Kontaktbereiche 48-1, 48-2 auf. Bei einem Einsetzen des Gleitteils 42 in die Gelenkpfanne 46 berührt die Konvexfläche 44 die Kontaktbereiche 48-1, 48-2. In der Ausführungsform von Fig. 7a weisen die Kontaktbereiche 48-1, 48-2 eine runde Form auf, sodass im Wesentlichen jeweils ein Kontaktpunkt zwischen Konvexfläche 44 und jeweiligem Kontaktbereich 48-1, 48-2 entsteht. Bei einer Relativbewegung des Gleitteils 42 gegenüber der Gelenkpfanne 46 bewegen sich somit die Kontaktbereiche bzw. Kontaktflächen bzw. Kontaktpunkte entlang der Konvexfläche und somit auf einem Zylinderabschnitt.

Fig. 7b zeigt eine weitere Ausführungsform einer Gleitlagereinrichtung 50 mit einem im Wesentlichen zu der Fig. 7a gleichen Gleitteil 42 mit Konvexfläche 44. Die Gelenkpfanne 52 ist jedoch gegenüber Fig. 7a anders ausgestaltet. Die Kontaktbereiche 54-1, 54-2 weisen die Form eines Hohlzylinderabschnitts auf.

Es sind weitere Formen der Gelenkpfanne denkbar. Beispielsweise könnte die Gelenkpfanne V-förmig sein, sodass die Konvexfläche 44 des Gleitteils 42 in den Figuren 7a und 7b an zwei Punkten (Kontaktbereiche) auf der Innenseite der V-Form aufliegt.

Fig. 8a zeigt eine weitere Ausführungsform einer Gleitlagereinrichtung 56 mit einem Gleitteil 58 und einer Gelenkpfanne 62. Das Gleitteil 58 weist zwei Kontaktbereiche 60-1, 60-2 auf und die Gelenkpfanne 62 umfasst eine Konkavfläche 64 in Form eines Hohlzylinderabschnitts.

Bei einem Einsetzen des Gleitteils 58 in die Gelenkpfanne 62 berührt das Gleitteil 58 mit seinen Kontaktbereichen 60-1, 60-2 die Konkavfläche 64 der Gelenkpfanne 62.

Somit bewegen sich die Kontaktbereiche 60-1, 60-2 des Gleitteils 58 bei einer Bewegung des Gleitteils 58 relativ zu der Gelenkpfanne 62 entlang der Konkavfläche 64.

Fig. 8b zeigt eine weitere Ausführungsform einer Gleitlagereinrichtung 66. Dabei ist die Gelenkpfanne gleich aufgebaut wie in Fig. 8a. Das Gleitteil 68 weist jedoch Kontaktbereiche 70-1, 70-2 mit einem konvexen Abschnitt in Form eines Zylinderabschnitts auf.

In obiger Beschreibung wurden drei verschiedene Ausführungsformen von Gleitlagereinrichtungen beschrieben. Eine erste mögliche Ausführungsform einer Gleitlagereinrichtung ist in den Fig. 1 bis 6 gezeigt. Bei einer Gleitlagereinrichtung gemäß den Fig. 1 bis 6 weist die Gleiteinheit eine Konvexfläche in Form eines Zylinderabschnitts und die Gelenkpfanne eine Konkavfläche in Form eines Hohlzylinderabschnitts auf. Die zweite mögliche Ausführungsform einer Gleitlagereinrichtung ist in den Fig. 7a und 7b dargestellt. Dabei weist das Gleitteil bzw. die Gleiteinheit eine Konvexfläche in Form eines Zylinderabschnitts auf. Die Gelenkpfanne weist hingegen keine Konkavfläche in Form eines Hohlzylinderabschnitts auf sondern Kontaktbereiche, die bei einer Bewegung entlang der Konvexfläche gleiten. Die dritte mögliche Ausführungsform der Gleitlagereinrichtung ist in den Fig. 8a und 8b gezeigt. Dabei weist die Gelenkpfanne eine Konkavfläche in Form eines Hohlzylinderabschnitts auf. Die Gleiteinheit weist hingegen keine Konvexfläche auf (wie bei der Ausführungsform gem. Figuren 1-6), sondern Kontaktbereiche, die bei einer Bewegung des Gelenks entlang der Konkavfläche der Gelenkpfanne gleiten.

Es sind nun zur Realisierung von zwei oder mehr Schwenkebenen der Lasereinheit beliebige Kombinationen der drei beschriebenen Ausführungsformen der Gleitlagereinrichtungen möglich.

Beispielsweise kann das Neigen der Lasereinheit in einer ersten Schwenkebene mittels einer Gleitlagereinrichtung gemäß der ersten Ausführungsform (Figuren 1-6) erfolgen und das Neigen in einer zweiten von der ersten verschiedenen Schwenkebene mit einer Gleitlagereinrichtung gemäß der dritten Ausführungsform (Fig. 8a, 8b).

Es sind beliebige Permutationen denkbar.

Des Weiteren sind alle zuvor im Zusammenhang mit den Fig. 1 bis 6 beschriebenen bevorzugten Ausführungsformen auch bei den Gleitlagereinrichtungen 40, 50, 56 und 66 in den Fig. 7 und 8 entsprechend anwendbar.

Beispielsweise können bei den Gleitlagereinrichtungen gemäß Fig. 7 und 8 wie zuvor Spannfedern vorgesehen sein, mittels welcher das jeweilige Gleitteil in die Gelenkpfanne gepresst wird. Ebenso können fest mit der Gelenkpfanne verbundene Sicherungseinrichtungen vorgesehen sein, mit welcher ein Herausfallen der Gleiteinheit aus der Gelenkpfanne verhinderbar ist.

Weiterhin können die Materialien wie zuvor beschrieben gewählt werden. Beispielsweise kann durch geeignete Wahl der Materialien in den Fig. 7 und 8 sichergestellt werden, dass jeweils gleitmodifiziertes Material, beispielsweise Kunststoff, auf nicht gleitmodifiziertem Material gleitet.

## Patentansprüche

1. Baulaser (29) mit:
einer Lasereinheit (28), und
einer Gleitlagereinrichtung (34), in der die Lasereinheit (28) gelagert ist, mit einer ersten Gelenkpfanne (10) und einer ersten Gleiteinheit (2), wobei die erste Gleiteinheit (2) eine erste Gleitkufe (4-1, 4-2) mit einer ersten Konvexfläche (6-1, 6-2) in Form eines ersten Zylinderabschnitts und die erste Gelenkpfanne (10) eine erste Konkavfläche (10-1, 10-2) in Form eines ersten Hohlzylinderabschnitts aufweisen, so dass die erste Konvexfläche (6-1, 6-2) in die erste Konkavfläche (10-1, 10-2) eingreifen kann und sich die Lasereinheit (28) bei einer Relativbewegung zwischen der ersten Konvexfläche (6-1, 6-2) und der ersten Konkavfläche (10-1, 10-2) in einer ersten Schwenkebene neigt.

2. Baulaser gemäß Anspruch 1, mit:
einer in der ersten Gleiteinheit (2) ausgebildeten zweiten Gelenkpfanne (20); und
einer zweiten Gleiteinheit (14), wobei die zweite Gleiteinheit (14) eine zweite Gleitkufe (16-1, 16-2) mit einer zweiten Konvexfläche (18-1, 18-2) in Form eines zweiten Zylinderabschnitts und die zweite Gelenkpfanne eine zweite Konkavfläche (20-1, 20-2) in Form eines zweiten Hohlzylinderabschnitts aufweisen, so dass die zweite Konvexfläche (18-1, 18-2) in die zweite Konkavfläche (20-1, 20-2) eingreifen kann und sich die Lasereinheit (28) bei einer Relativbewegung zwischen der zweiten Konvexfläche (18-1, 18-2) und der zweiten Konkavfläche (20-1, 20-2) in einer zweiten Schwenkebene neigt.

3. Baulaser gemäß Anspruch 2, wobei die erste Schwenkebene und die zweite Schwenkebene in einem vorbestimmten Winkel zueinander stehen.

4. Baulaser gemäß Anspruch 2 oder 3, wobei die erste Schwenkebene und die zweite Schwenkebene rechtwinklig zueinander stehen.

5. Baulaser gemäß einem der vorstehenden Ansprüche, wobei die Radien des ersten Zylinderabschnitts und des ersten Hohlzylinderabschnitts im Wesentlichen gleich sind.

6. Baulaser gemäß einem der Ansprüche 2 bis 5, wobei die Radien des zweiten Zylinderabschnitts und des zweiten Hohlzylinderabschnitts im Wesentlichen gleich sind.

7. Baulaser gemäß einem der Ansprüche 2 bis 6, wobei die Radien des ersten Zylinderabschnitts, des zweiten Zylinderabschnitts, des ersten Hohlzylinderabschnitts und des zweiten Hohlzylinderabschnitts im Wesentlichen gleich sind.

8. Baulaser gemäß einem der Ansprüche 2 bis 7, mit
einem Laser zur Erzeugung eines Laserstrahls (L), und
einer in der Lasereinheit (28) angeordneten Umlenkeinrichtung (36) zum Umlenken des Laserstrahls an einem Umlenkpunkt (U),
wobei der Mittelpunkt des dem ersten Zylinderabschnitt zugrunde liegenden Zylinders, der Mittelpunkt des dem zweiten Zylinderabschnitt zugrunde liegenden Zylinders, der Mittelpunkt des dem ersten Hohlzylinderabschnitt zugrunde liegenden Hohlzylinders und/oder der Mittelpunkt des dem zweiten Hohlzylinderabschnitt zugrunde liegenden Hohlzylinders mit dem Umlenkpunkt zusammenfallen.

9. Baulaser gemäß einem der Ansprüche 1 bis 8, mit wenigstens einer ersten Spannfeder (23), mittels weicher die erste Konkavfläche (10-1, 10-2) und die erste Konvexfläche (6-1, 6-2) aneinander pressbar sind.

10. Baulaser gemäß einem der Ansprüche 1 bis 9, mit wenigstens einer zweiten Spannfeder (23), mittels welcher die zweite Konkavfläche (20-1, 20-2) und die zweite Konvexfläche (18-1, 18-2) aneinander pressbar sind.

11. Baulaser gemäß einem der Ansprüche 1 bis 10, mit einer mit der ersten Gelenkpfanne (10) fest verbundenen Sicherungseinrichtung (12), mit welcher ein Herausfallen der ersten Gleiteinheit (2) aus der ersten Gelenkpfanne (10) verhinderbar ist.

12. Baulaser gemäß einem der Ansprüche 2 bis 11, mit einer zweiten Sicherungseinrichtung (22), mit welcher ein Herausfallen der zweiten Gleiteinheit (14) aus der zweiten Gelenkpfanne verhinderbar ist.

13. Baulaser gemäß einem der Ansprüche 1 bis 12, wobei die erste Konvexfläche (6-1, 6-2) aus gleitmodifiziertem Material hergestellt ist.

14. Baulaser gemäß einem der Ansprüche 2 bis 13, wobei die zweite Konkavfläche (20-1, 20-2) aus gleitmodifiziertem Material hergestellt ist.

15. Baulaser gemäß einem der Ansprüche 2 bis 14, wobei die erste Konkavfläche (10-1, 10-2) und die zweite Konvexfläche (18-1, 18-2) aus nicht gleitmodifiziertem Material hergestellt sind.

## Claims

1. Construction laser (29), comprising:
a laser unit (28) and
a sliding bearing device (34), in which the laser unit (28) is mounted and comprising a first socket (10) and a first sliding unit (2), wherein the first sliding unit (2) has a first sliding shoe (4-1, 4-2) with a first convex surface (6-1, 6-2) in the form of a first cylindrical portion and the first socket (10) has a first concave surface (10-1, 10-2) in the form of a first hollow cylindrical portion, such that the first convex surface (6-1, 6-2) can engage in the first concave surface (10-1, 10-2) and the laser unit (28) is tilted in a first pivot plane upon a relative movement between the first convex surface (6-1, 6-2) and the first concave surface (10-1, 10-2).

2. Construction laser according to claim 1, comprising:
a second socket (20) provided in the first sliding unit (2) and
a second sliding unit (14), wherein the second sliding unit (14) has a second sliding shoe (16-1, 16-2) with a second convex surface (18-1, 18-2) in the form of a second cylindrical portion and the second socket has a second concave surface (20-1, 20-2) in the form of a second hollow cylindrical portion, such that the second convex surface (18-1, 18-2) can engage in the second concave surface (20-1, 20-2) and the laser unit (28) is tilted in a second pivot plane upon a relative movement between the second convex surface (18-1, 18-2) and the second concave surface (20-1, 20-2).

3. Construction laser according to claim 2, wherein the first pivot plane and the second pivot plane are arranged at a predetermined angle relative to one another.

4. Construction laser according to claim 2 or claim 3, wherein the first pivot plane and the second pivot plane are arranged at right angles to one another.

5. Construction laser according to one of the preceding claims, wherein the radii of the first cylindrical portion and the first hollow cylindrical portion are essentially equal.

6. Construction laser according to one of claims 2 to 5, wherein the radii of the second cylindrical portion and the second hollow cylindrical portion are essentially equal.

7. Construction laser according to one of claims 2 to 6, wherein the radii of the first cylindrical portion, the second cylindrical portion, the first hollow cylindrical portion and the second hollow cylindrical portion are essentially equal.

8. Construction laser according to one of claims 2 to 7, comprising
a laser for generating a laser beam (L) and
a deflecting device (36) arranged in the laser unit (28) for deflecting the laser beam at a deflection point (U),
wherein the centre point of the cylinder forming the basis of the first cylindrical portion, the centre point of the cylinder forming the basis of the second cylindrical portion, the centre point of the hollow cylinder forming the basis of the first hollow cylindrical portion and/or the centre point of the hollow cylinder forming the basis of the second hollow cylindrical portion coincide with the deflection point.

9. Construction laser according to one of claims 1 to 8, comprising at least a first tension spring (23) by means of which the first concave surface (10-1, 10-2) and the first convex surface (6-1, 6-2) can be pressed together.

10. Construction laser according to one of claims 1 to 9, comprising at least a second tension spring (23) by means of which the second concave surface (20-1, 20-2) and the second convex surface (18-1, 18-2) can be pressed together.

11. Construction laser according to one of claims 1 to 10, comprising a locking device (12) rigidly connected to the first socket (10) by means of which the first sliding unit (2) can be prevented from falling out of the first socket (10).

12. Construction laser according to one of claims 2 to 11, comprising a second locking device (22) by means of which the second sliding unit (14) can be prevented from falling out of the second socket.

13. Construction laser according to one of claims 1 to 12, wherein the first convex surface (6-1, 6-2) is produced from a material the sliding properties of which have been modified.

14. Construction laser according to one of claims 2 to 13, wherein the second concave surface (20-1, 20-2) is produced from a material the sliding properties of which have been modified.

15. Construction laser according to one of claims 2 to 14, wherein the first concave surface (10-1, 10-2) and the second convex surface (18-1, 18-2) are produced from a material the sliding properties of which have not been modified.

## Revendications

1. Laser de construction (29) comportant :
une unité laser (28), et
un dispositif de palier à glissement (34) dans lequel l'unité laser (28) est montée, ayant une première cavité articulaire (10) et une première unité de glissement (2), dans lequel la première unité de glissement (2) comporte un premier patin de glissement (4-1, 4-2) ayant une première surface convexe (6-1, 6-2) sous la forme d'une première partie cylindrique et la première cavité articulaire (10) comporte une première surface concave (10-1, 10-2) sous la forme d'une première partie cylindrique creuse, de sorte que la première surface convexe (6-1, 6-2) peut s'engager dans la première surface concave (10-1, 10-2) et l'unité laser (28) bascule dans un premier plan de pivotement lors d'un mouvement relatif entre la première surface convexe (6-1, 6-2) et la première surface concave (10-1, 10-2).

2. Laser de construction selon la revendication 1, comportant :
une seconde cavité articulaire (20) formée dans la première unité de glissement (2), et
une seconde unité de glissement (14), la se**conde unité de glissement (14) comportant un second patin** de glissement (16-1, 16-2) ayant une seconde surface convexe (18-1, 18-2) sous la forme d'une seconde partie cylindrique et la seconde cavité articulaire comportant une seconde surface concave (20-1, 20-2) sous la forme d'une seconde partie cylindrique creuse, de sorte que la seconde surface convexe (18-1, 18-2) peut s'engager dans la seconde surface concave (20-1, 20-2) et l'unité laser (28) bascule dans un second plan de pivotement lors d'un mouvement relatif entre la seconde surface convexe (18-1, 18-2) et la seconde surface concave (20-1, 20-2).

3. Laser de construction selon la revendication 2, dans lequel le premier plan de pivotement et le second plan de pivotement sont à un angle prédéterminé l'un par rapport à l'autre.

4. Laser de construction selon la revendication 2 ou 3, dans lequel le premier plan de pivotement et le second plan de pivotement sont à angles droits l'un par rapport à l'autre.

5. Laser de construction selon l'une des revendications précédentes, dans lequel les rayons de la première partie cylindrique et de la première partie cylindrique creuse sont sensiblement identiques.

6. Laser de construction selon l'une des revendications 2 à 5, dans lequel les rayons de la seconde partie cylindrique et de la seconde partie cylindrique creuse sont sensiblement identiques.

7. Laser de construction selon l'une des revendications 2 à 6, dans lequel les rayons de la première partie cylindrique, de la seconde partie cylindrique, de la première partie cylindrique creuse et de la seconde partie cylindrique creuse sont sensiblement identiques.

8. Laser de construction selon l'une des revendications 2 à 7, comportant :
un laser pour générer un faisceau laser (L), et
un dispositif de déviation (36) agencé dans l'unité laser (28) pour dévier le faisceau laser en un point de déviation (U),
dans lequel le centre du cylindre formant la première partie cylindrique, le centre du cylindre formant la seconde partie cylindrique, le centre du cylindre creux formant la première partie cylindrique creuse et/ou le centre du cylindre creux formant la seconde partie cylindrique creuse coïncident avec le point de déviation.

9. Laser de construction selon l'une des revendications 1 à 8, comportant au moins un premier ressort de tension (23) au moyen duquel la première surface concave (10-1, 10-2) et la première surface convexe (6-1, 6-2) peuvent être pressées l'une contre l'autre.

10. Laser de construction selon l'une des revendications 1 à 9, comportant au moins un second ressort de tension (23) au moyen duquel la seconde surface concave (20-1, 20-2) et la seconde surface convexe (18-1, 18-2) doivent être pressées l'une contre l'autre.

11. Laser de construction selon l'une des revendications 1 à 10, comportant un dispositif de sécurité (12) fixement relié à la première cavité articulaire (10), dispositif de sécurité au moyen duquel une chute de la première unité de glissement (2) à partir de la première cavité articulaire (10) peut être empêchée.

12. Laser de construction selon l'une des revendications 2 à 11, comportant un second dispositif de sécurité (22) au moyen duquel une chute de la seconde unité de glissement (14) à partir de la seconde cavité articulée peut être empêchée.

13. Laser de construction selon l'une des revendications 1 à 12, dans lequel la première surface convexe (6-1, 6-2) est fabriquée à partir d'un matériau dont la propriété de glissement a été modifiée.

14. Laser de construction selon l'une des revendications 2 à 13, dans lequel la seconde surface concave (20-1, 20-2) est fabriquée à partir d'un matériau dont la propriété de glissement a été modifiée.

15. Laser de construction selon l'une des revendications 2 à 14, dans lequel la première surface convexe (10-1, 10-2) et la seconde surface convexe (18-1, 18-2) sont fabriquées à partir d'un matériau dont la propriété de glissement n'a pas été modifiée.
